# EUROPÄISCHE PATENTSCHRIFT

(11) **EP 0 902 347 B1**
(45) Veröffentlichungstag und Bekanntmachung des Hinweises auf die Patenterteilung: **16.05.2001**
(21) Anmeldenummer: 98116834.7
(22) Anmeldetag: 07.09.1998
(51) Int. Cl.: G05D 16/14, G05D 16/02, G05D 16/06, F16K 31/36, F16K 17/14, F16K 41/00

(54) **Gasdruckregelgerät**
Gas pressure regulator
Régulateur de pression pour gaz

(30) Priorität: 12.09.1997 DE 19740157; 30.07.1998 DE 29813595 U
(43) Veröffentlichungstag der Anmeldung: 17.03.1999
(73) Patentinhaber: ELSTER PRODUKTION GMBH, 55252 Mainz-Kastel (DE)
(72) Erfinder: Ladage, Paul, 65343 Eltville (DE)
(74) Vertreter: Harlacher, Mechthild, Dipl.-Ing.

(56) Entgegenhaltungen:
- DE-C- 19 602 699
- US-A- 5 338 004

## Beschreibung

Die Erfindung betrifft ein Gasdruckregelgerät mit einem im Druckgießverfahren hergestellten Gehäuse, das mit einem Einlaß- und einem Auslaßstutzen aus Gußstahl oder dergleichen verbunden ist.

Derartige Geräte haben den Vorteil einer einfachen und dementsprechend kostengünstigen Herstellung. Das Druckguß-Gehäuse besteht vorzugsweise aus Aluminium und bedarf praktisch keiner Nachbearbeitung. Im Gehäuse befinden sich Einbauten, insbesondere das Meßwerk mit seinen Membranen und das Regelstellglied in Form eines Ventilsitzes mit zugehörigem Ventilteller. Die beiden in das Gehäuse eingesteckten Stutzen sind von einfacher Formgebung und stellen keine wesentlichen fertigungstechnischen Anforderungen. Der Begriff "Gußstahl" ist im vorliegenden Zusammenhang weit auszulegen. Er soll gleichermaßen Grauguß wie Sphäroguß umfassen. Femer kommen auch andere Metalle mit vergleichbaren Festigkeitseigenschaften in Frage, beispielsweise Messing.

Gasdruckregelgeräte dienen dazu, die Höhe des Ausgangsdruckes zu regeln. Gasdruckregelgeräte werden häufig mit einem Sicherheitsabsperrventil (SAV) kombiniert. Dieses soll bei Unter- oder Überschreiten eines Grenzwertes den Gasweg vollständig absperren. Das SAV ist oft getrennt vom Regelgerät in einem separaten Gehäuse untergebracht.

Aus der OS 195 15 731 ist ein Gasdruckregelgerät bekannt, bei dem das Meßwerk des Regelgerätes und das SAV an einen Einlaß- und einen Auslaßstutzen angeschlossen ist. Das Meßwerk und das SAV befinden sich in separaten Gehäusen. Das Regelstellglied bzw. Regelventil befindet sich nicht in einem der Gehäuse, sondern zwischen den Stutzen. Diese Konstruktion ist kompliziert und anfällig gegen Undichtigkeiten.

Gasdruckregelgeräte werden normalerweise installiert, nachdem die Anschlußleitungen fertig verlegt worden sind. Sehr häufig werden beim Verlegen der Leitungen die Anschlußmaße der Regelgeräte nicht absolut exakt eingehalten. Man ist daher darauf angewiesen, daß die Geräte Rohrleitungsverspannungen aufnehmen, die aus Fluchtungs- und Längenabweichungen resultieren. Insoweit läßt die eingangs genannte Konstruktion zu wünschen übrig. Die bereits verlegten Leitungen müssen also nachträglich angepaßt werden, wodurch sich ein zusätzlicher Montageaufwand ergibt.

Der Erfindung liegt die Aufgabe zugrunde, ein einfach aufgebautes Gasdruckregeigerät der eingangs genannten Art zu schaffen, das sich auch bei fehlerhafter Verlegung der Anschlußleitungen problemlos montieren läßt.

Zur Lösung dieser Aufgabe ist das eingangs genannte Gasdruckregelgerät erfindungsgemäß dadurch gekennzeichnet, daß der Einlaß- und der Auslaßstutzen als einteiliges Anschlußstück ausgebildet sind und daß das Gehäuse mit dem Anschlußstück verbunden ist.

Das Anschlußstück kann aufgrund seiner Festigkeitseigenschaften ganz erhebliche Rohrleitungsverspannungen aufnehmen. Dadurch lassen sich auch relativ grobe Montagetoleranzen der Anschlußleitungen kompensieren. Dabei ist das Anschlußstück ebenso problemlos zu fertigen wie die Anschlußstutzen des Standes der Technik.

Das Druckguß-Gehäuse wird von etwaigen Rohrleitungsverspannungen völlig entlastet. Nach wie vor können also die Vorteile seiner einfachen und maßgenauen Herstellung genutzt werden. Das Gehäuse wird vorzugsweise auf das Anschlußstück aufgeflanscht. Diese Art der Verbindung ist wesentlich einfacher als das abgedichtete Einstecken der Anschlußstutzen nach dem Stand der Technik.

Insgesamt schafft die Erfindung also ein extrem einfach zu fertigendes, zu montierendes und zu installierendes Gasdruckregelgerät, dessen Funktionsfähigkeit und Lebensdauer durch etwaige Rohrleitungsverspannungen nicht beeinträchtigt wird.

Der modulare Aufbau des Gerätes bietet die besonders vorteilhafte Möglichkeit, ein und dasselbe Gehäuse mit unterschiedlichen Anschlußstücken zu kombinieren. Letztere können also beidseitig mit Gewinde oder mit Flanschen versehen sein. Ferner sind Ausführungsformen möglich, bei denen auf der einen Seite ein Gewinde und auf der anderen Seite ein Flansch angeordnet ist. Vor allen Dingen können die Anschlußstücke ohne weiteres auch als Einrohr-Anschlußstücke ausgebildet sein. Die Vorteile dieser Modul-Bauweise für die Herstellung und Lagerhaltung liegen auf der Hand.

Die Erfindung ist gleichermaßen anwendbar auf Ein-Stufen- wie auf Zwei-Stufen-Regler. Auch eignet sie sich für Niederdruckregelgeräte.

Ganz besonders vorteilhaft ist die Anwendung der Erfindung auf Mitteldruckgeräte. Bei diesen Geräten verlangen die Vorschriften zur Hochtemperaturbeständigkeit, daß im Überhitzungsfalle eine Absperrung des Gasstroms innerhalb des Gerätes möglich ist.

Dementsprechend wird in Weiterbildung der Erfindung vorgeschlagen, daß bei Verwendung einer thermischen Abschaltsicherung (TAS) diese einlaßseitig im Anschlußstück angeordnet ist. Im Brandfalle wird also der Einlaß des Regelgerätes gesperrt. Damit ist den Anforderungen an die Hochtemperaturbeständigkeit genüge getan. Das Gehäuse einschließlich sämtlicher Einbauten bedarf keiner Hochtemperaturbeständigkeit. Dies betrifft nicht nur das Regelventil mit seinen elastomeren Membranen und Dichtelementen, sondern, sofern vorhanden, auch das Sicherheitsabsperrventil (SAV), welches den Gasdurchfluß unterbricht, sobald auslaßseitig ein unzulässiger Unterdruck oder Überdruck auftritt. Da keine Temperaturfestigkeit dieser Ventilanordnungen erforderlich ist, ergeben sich entsprechende fertigungstechnische Vereinfachungen.

Da das Anschlußstück einen einfachen Anbau, vorzugsweise ein Anflanschen des Gehäuses ermöglicht, liegen die Öffnungen der an das Gehäuse anzuschließenden Kanäle (Einlaßkanal und Auslaßkanal) eng benachbart nebeneinander, vorzugsweise in einer Ebene. Dies bietet die vorteilhafte Möglichkeit, eine mit dem Anschlußstück verbindbare Überströmkappe und/oder eine mit dem Anschlußstück verbindbare Verschlußkappe vorzusehen. Hieraus resultiert eine ganz beträchtliche Montagevereinfachung. Das Anschlußstück kann bereits beim Verlegen der Anschlußleitungen installiert werden. Die beiden Öffnungen des Einlaßkanals und das Auslaßkanals werden sodann mit der Verschlußkappe verschlossen, bis später die Montage des Regelgerätes erfolgt. Man kann das Anschlußstück sogar so zu sagen "auf Verdacht" installieren. Sollte später kein Regelgerät angeflanscht werden, so verbindet man die beiden Öffnungen mittels der Überströmkappe.

Bei einer weiteren Ausführungsform weist das Anschlußstück einen Einrohr-Anschluß für einen Gaszähler auf. Auf diese Weise wird es möglich, einen Gaszähler, speziell einem Balgengaszähler oder einen Ultraschallzähler, unmittelbar mit dem Anschlußstück zu verbinden. Die Zahl der Verbindungsstellen und somit Dichtstellen wird verringert. Dies führt zu einer Verbilligung der Installationseinheit und zur Verringerung der Installationsarbeit. Eine Einheit kann komplett vormontiert und geprüft an einen Kunden ausgeliefert werden.

Vorzugsweise weist das Anschlußstück eine Befestigungsplatte auf. Mit deren Hilfe kann die gesamte Einheit auf einfache Weise an der Wand befestigt werden.

Die Erfindung wird im folgenden anhand bevorzugter Ausführungsbeispiele im Zusammenhang mit der beiliegenden Zeichnung näher erläutert. Die Zeichnung zeigt in:
- Fig. 1: einen Schnitt durch ein Gasdruckregelgerät nach einer ersten Ausführungsform;
- Fig. 2: einen Schnitt durch eine abgewandelte Ausführungsform;
- Fig. 3: ein Anschlußstück mit einer Überströmkappe;
- Fig. 4: das Anschlußstück nach Fig. 4 mit einer Verschlußkappe;
- Fig. 5: einen Schnitt durch eine weitere abgewandelte Ausführungsform.

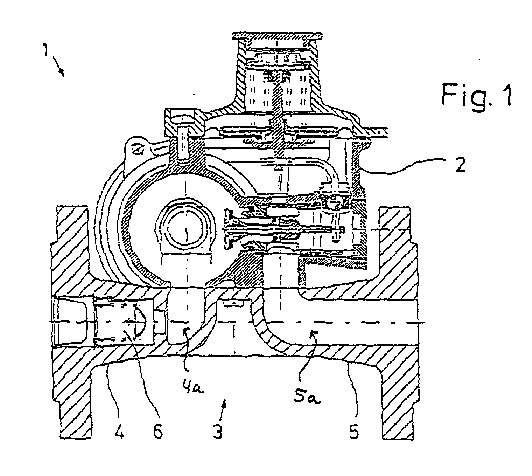

Fig. 1 zeigt ein zweistufiges Mitteldruck- Gasdruckregelgerät 1 mit einem Gehäuse 2 und einem Anschlußstück 3, welches einen Einlaßstutzen 4 und einen Auslaßstutzen 5 bildet. Diese sind jeweils mit einer nicht dargestellten Gasleitung verbunden. Das Gehäuse 2 besteht aus Aluminium-Druckguß und läßt sich daher sehr maßgenau fertigen, praktisch ohne einer Nachbearbeitung zu bedürfen. Es läßt sich daher sehr kostengünstig herstellen. Das Anschlußstück 3 besteht aus Stahlguß und besitzt entsprechende Festigkeitseigenschaften. Es kann daher Rohrleitungsverspannungen, hervorgerufen durch Fluchtungs- und Längenabweichungen der Anschlußleitungen, problemlos kompensieren. Das Anschlußstück 3 stellt ein einfach zu fertigendes Formteil dar. Das Gehäuse 2 ist auf das Anschlußstück 3 aufgeflanscht.

Das Gas tritt durch einen Einlaßkanal 4 a in das Gehäuse ein. Zu dessen Einbauten gehören vor allem das eigentliche Meßwerk mit seinen Membranen und das Regelstellglied in Form eines Ventilsitzes mit zugehörigem Ventilteller. Das Regelstellglied, das auf den Gasstrom einwirkt, ist also komplett im Gehäuse 2 untergebracht. Der Gasstrom im Gehäuse 2 wird auf den erforderlichen Ausgangsdruck geregelt und strömt durch Auslaßkanal 5 a in die nicht dargestellte Gasleitung zum Verbraucher.

Insgesamt ergibt sich ein einfach herzustellendes und zu montierendes Gerät, welches auch bei fehlerhafter Verlegung der Anschlußleitungen problemlos installiert werden kann.

Das Regelgerät nach Fig. 1 ist hochtemperaturbeständig und weist hierzu eine thermische Abschaltsicherung (TAS) 6 auf. Letztere ist im Einlaßstutzen 4 im Einlaßkanal 4 a des Anschlußstücks 3 angeordnet. Im Brandfalle wird also der Einlaß des Regelgerätes gesperrt. Daher entfällt die Notwendigkeit, das Gehäuse 2 einschließlich seiner Einbauten hochtemperaturbeständig auszubilden. Integriert im Gehäuse ist außerdem ein Sicherheitsabsperrventil (SAV), welches die Armatur bei unzulässigen Druckänderungen im Auslaß verschließt. Dieses ist dementsprechend nicht hochtemperaturfest.

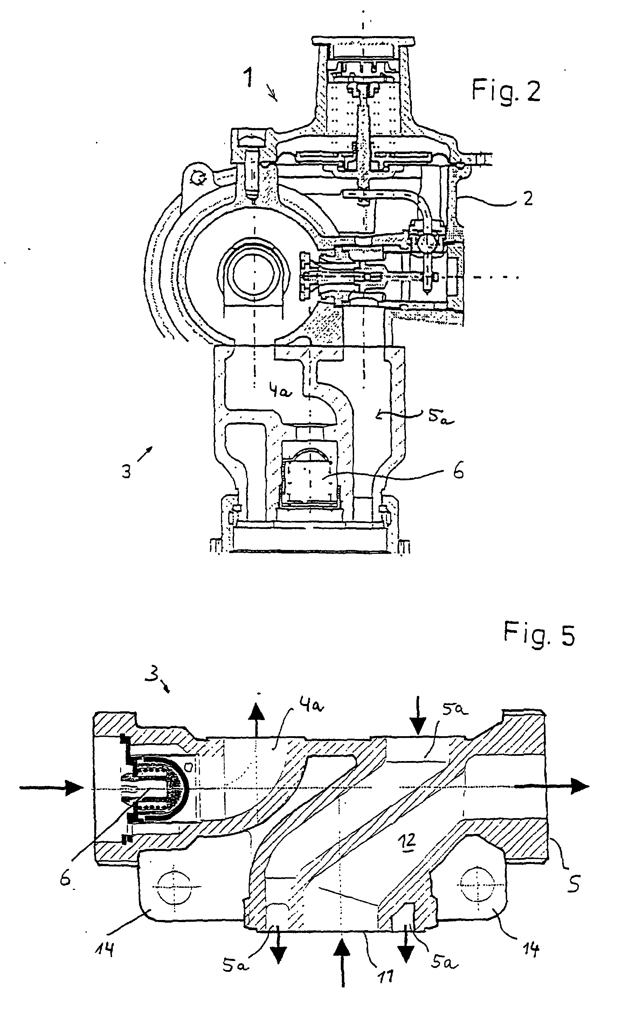

Bei der Ausführungsform nach Fig. 2 ist das Anschlußstück 3 als Einrohr-Anschluß ausgebildet.

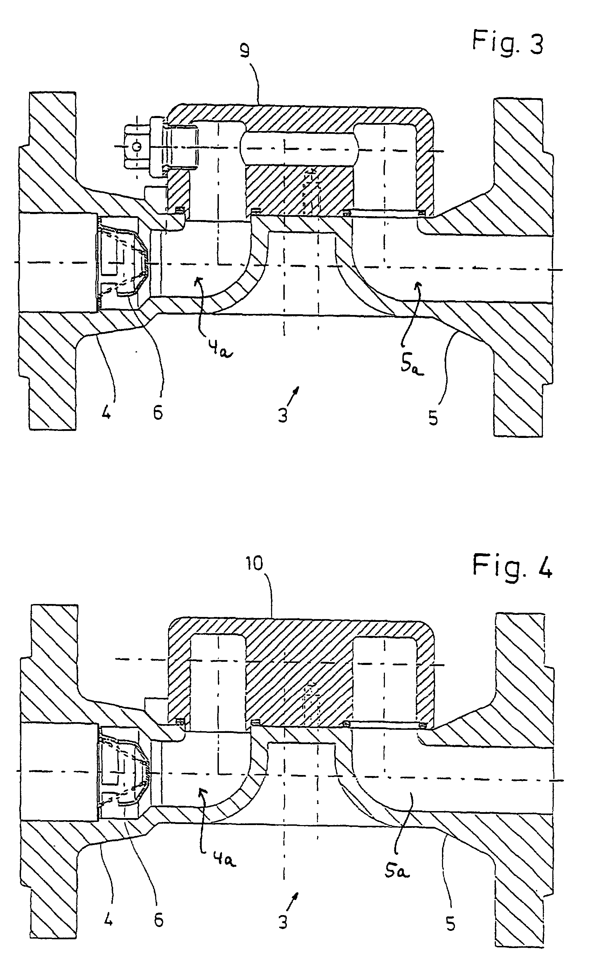

Fig. 3 zeigt eine Überströmkappe 9, die auf das Anschlußstück 3 aufgeflanscht ist. Die Überströmkappe 9 kann jederzeit durch das Gehäuse 2 ersetzt werden. Bis dahin bildet das Anschlußstück 3 lediglich die Halterung für die TAS.

Nach Fig. 4 ist eine Verschlußkappe 10 auf das Anschlußstück 3 aufgeflanscht. Auch die Verschlußkappe 10 kann jederzeit durch das Gehäuse 2 ersetzt werden.

Fig. 5 zeigt eine weitere Ausführungsform des Anschlußstückes. Dieses weist einen Einrohr-Anschluß 11 für einen Gaszähler, beispielsweise einen Balgengaszähler oder einen Ultraschallzähler, auf. Bei dieser Ausführungsform ist der an das Gehäuse anschließbare Auslaßkanal 5a nicht an eine Gasleitung angeschlossen, sondern an den Gaszähler. Dadurch wird es möglich, den Gaszähler unmittelbar mit dem Anschlußstück zu verbinden. Die Zahl der Verbindungsteile und somit Dichtstellen ist gering. Die Installation ist äußerst kompakt.

Der Gasstrom wird durch die Abschaltsicherung 6 im Einlaßkanal 4a in das nicht dargestellte Gasdruckregelgerät geleitet und auf Ausgangsdruckniveau heruntergeregelt. Das Gas wird anschließend über den Auslaßkanal 5a in einen nicht dargestellten Gaszähler geleitet. Das gemessene Gas wird über einen Abführkanal 12 in den Auslaßstutzen 5 des Anschlußstückes 3 geführt. Der Auslaßkanal 5a umgibt konzentrisch den Abführkanal 12. Derartige Einrohr-Anschlüsse sind für Gaszähler an sich bekannt.

Mittels einer Befestigungsplatte 14 kann die gesamte Einheit an der Wand befestigt werden.

Im Rahmen der Erfindung sind durchaus Abwandlungsmöglichkeiten gegeben. So läßt sich die Erfindung ohne weiteres auf einstufige Regler anwenden, und zwar auch unabhängig davon, ob es sich um Niederdruckregler oder Mitteldruckregler handelt. Fig. 1 zeigt beidseitige Flanschanschlüsse und Fig. 2 beidseitige Gewindeanschlüsse. Eine Kombination eines Flanschanschlusses auf der einen Seite mit einem Gewindeanschluß auf der anderen Seite ist gleichermaßen möglich. Ferner handelt es sich bei den beschriebenen Ausführungsformen um Flanschverbindungen zwischen dem Gehäuse und dem Anschlußstück. Andere Verbindungsmöglichkeiten, auch solche unlösbarer Art, sind gleichermaßen möglich.

Es wäre auch möglich, bei Verwendung eines Sicherheitsabsperrventils (SAV), dessen Auslösemechanismus im Gehäuse und dessen Ventilsitz einlaßseitig im Anschlußstück anzuordnen, wobei der Auslösemechanismus mit einem thermischen Auslöseelement gekoppelt ist. Das Ventilelement des SAV übernimmt also die einlaßseitige Absperrung des Regelgerätes auch im Falle einer Überhitzung der Armatur. Dies stellt eine konstruktive Vereinfachung dar. Die Hochtemperaturbeständigkeit beschränkt sich dabei auf den Sitz und das Ventilelement des SAV, also auf den Bereich des Anschlußstücks. Das Gehäuse mit den übrigen Einbauelementen, einschließlich des sowohl druck- als auch temperaturempfindlichen Auslösemechanismus des SAV, bedürfen keiner Hochtemperaturbeständigkeit.

Für das Gehäuse kommen grundsätzlich sämtliche Materialien, ggfs. auch Kunststoffe, infrage, die im Druckgießverfahren verarbeitet werden können, wobei nur vergleichsweise geringe Anforderungen an die Festigkeitseigenschaften zu stellen sind. Letztere hingegen spielen beim Anschlußstück eine wesentliche Rolle. Eine Beschränkung auf Stahl allerdings ist nicht gegeben. Ohne weiteres denkbar ist beispielsweise Messing.

## Patentansprüche

1. Gasdruckregelgerät mit einem im Druckgießverfahren hergestellten Gehäuse (2), das mit einem Einlaß- und einem Auslaßstutzen (4, 5) aus Gußstahl verbunden ist, dadurch gekennzeichnet,
daß der Einlaß- und der Auslaßstutzen (4, 5) als einteiliges Anschlußstück (3) ausgebildet sind, und daß das Gehäuse (2) mit dem Anschlußstück (3) verbunden ist.

2. Gasdruckregelgerät nach Anspruch 1, dadurch gekennzeichnet, daß bei Verwendung einer thermischen Abschaltsicherung (TAS) (6) diese einlaßseitig im Anschlußstück (3) angeordnet ist.

3. Gasdruckregelgerät nach Anspruch 1 oder 2, dadurch gekennzeichnet, daß im Einlaßstutzen (4) ein Einlaßkanal (4 a) und im Auslaßstutzen (5) ein Auslaßkanal (5 a) vorgesehen sind, wobei die Kanäle (4 a, 5 a) an das Gehäuse (2) anschließbar sind.

4. Gasdruckregelgerät nach einem der Ansprüche 1 bis 3, gekennzeichnet durch eine mit dem Anschlußstück (3) verbindbare Überströmkappe (9).

5. Gasdruckregelgerät nach einem der Ansprüche 1 bis 4, gekennzeichnet durch eine mit dem Anschlußstück (3) verbindbare Verschlußkappe.

6. Gasdruckregelgerät nach einem der Ansprüche 1 bis 5, dadurch gekennzeichnet, daß das Anschlußstück (3) einen Einrohr-Anschluß (11) für einen Gaszähler aufweist:

7. Gasdruckregelgerät nach einem der Ansprüche 1 bis 6, dadurch gekennzeichnet, daß das Anschlußstück (3) eine Befestigungsplatte (14) aufweist.

## Claims

1. Gas regulator with a diecast housing (2) which is connected to an inlet nozzle (4) and an outlet nozzle (5), both made of cast steel, characterised in that
the inlet and the outlet nozzles (4, 5) are designed as a one-piece connector (3) and that the housing (2) is connected to the connector (3).

2. Gas regulator according to claim 1, characterised in that, if a thermal cutoff device (6) is used, said cutoff device is arranged in the connector (3) on the inlet side.

3. Gas regulator according to claim 1 or 2, characterised in that an inlet duct (4a) is provided in the inlet nozzle (4) and an outlet duct (5a) is provided in the outlet nozzle (5), it being possible to connect the ducts (4a, 5a) to the housing (2).

4. Gas regulator according to any one of claims 1 through 3, characterised by an overflow cap (9) which can be connected to the connector (3).

5. Gas regulator according to any one of claims 1 through 4, characterised by a sealing cap which can be connected to the connector (3).

6. Gas regulator according to any one of claims 1 through 5, characterised in that the connector (3) has a one-pipe connection (11) for a gas meter.

7. Gas regulator according to any one of claims 1 through 6, characterised in that the connector (3) has a mounting plate (14).

## Revendications

1. Régulateur de pression de gaz avec un carter (2) fabriqué suivant le procédé de coulée sous pression et raccordé à une tubulure d'entrée et une tubulure de sortie (4, 5) en acier coulé, caractérisé par le fait que la tubulure d'entrée et la tubulure de sortie (4, 5) sont fabriquées en une seule pièce de raccordement (3) et que le carter (2) est raccordé à la pièce de raccordement (3).

2. Régulateur de pression de gaz suivant la revendication 1, caractérisé par le fait qu'en cas d'utilisation d'un dispositif d'arrêt de sécurité thermique (6), celui-ci est disposé côté entrée dans la pièce de raccordement (3).

3. Régulateur de pression de gaz suivant les revendications 1 ou 2, caractérisé par le fait que dans la tubulure d'entrée (4) est prévu un canal d'entrée (4a) et dans la tubulure de sortie (5) est prévu un canal de sortie (5a), et que les canaux (4a, 5a) peuvent être raccordés au carter (2).

4. Régulateur de pression de gaz suivant l'une des revendications 1 à 3, caractérisé par un capuchon de trop-plein (9) pouvant être raccordé à la pièce de raccordement (3).

5. Régulateur de pression de gaz suivant l'une des revendications 1 à 4, caractérisé par un capuchon d'obturation pouvant être raccordé à la pièce de raccordement (3).

6. Régulateur de pression de gaz suivant l'une des revendications 1 à 5, caractérisé par le fait que la pièce de raccordement (3) présente un raccord à tube unique (11) pour le raccordement d'un compteur à gaz.

7. Régulateur de pression de gaz suivant l'une des revendications 1 à 6, caractérisé par le fait que la pièce de raccordement (3) présente une plaque de fixation (14).
